# EUROPEAN PATENT APPLICATION

(11) **EP 2 955 498 A1**
(43) Date of publication of application: **16.12.2015**
(21) Application number: 14171678.7
(22) Date of filing: 09.06.2014
(51) Int. Cl.: G01L 5/00, B66C 15/00, G01N 3/10, G01M 99/00, G01L 1/08, A61G 7/10, G06F 19/00

(54) **Sling testing apparatus**

(71) Applicant: ArjoHuntleigh Polska s.p. z.o.o, NIP 779-22-81-5 Komorniki (PL)
(72) Inventor: Schwarz, Michael, 1130 Wien (AT); Stumpe, Herbert, 6063 Rum (AT); Gorny, Piotr, 62-020 Swarzedz (PL); Helf, Frank, 55411 Bingen (DE)
(74) Representative: Zacco GmbH

(57) **Abstract**

Portable sling testing apparatus (10) for testing patient slings (200) includes a plurality of dummy units (30, 34) attachable to a frame and actuator unit (14) of the apparatus (10). The apparatus (10) includes an extendable pressurisation actuator (120) and a spreader plate (90) which includes a plurality of attachment points (92-95) for attaching the straps and hooks of a sling (200). The apparatus (10) is intended to load a sling (200) to operating loads for checking the sling (200). A control unit (100) controls the amount of load applied to the sling (200) and a time duration of the test. The apparatus (10) can be dismounted into a plurality of component parts for ease of transportation.

## Description

### Fiel of the Invention

The present invention relates to apparatus for testing the condition of patient slings and similar patient supports.

### Background of the Invention

Slings are used in hospital and care home environments for supporting and transporting patients having limited mobility. A high number of transfers often take place with the patient at least a metre above ground level. A patient failing from such a height could suffer severe injury. A patient could fall out of a sling as a result of breakage of the sling. In order to avoid the risk of patient injury during the use of such slings, regulatory bodies have set a requirement for such slings to be able to withstand 1.5 times the safe working load (SWL) of the sling for a period of 20 minutes after 20 washing cycles. In practice, many hospital slings are designed to be functional for significantly longer periods, typically one or two years or so. While sling of such a type can work satisfactorily and with negligible risk of breakage if used and treated properly, incorrect washing and damage to the sling can weaken the sling much earlier than its rated lifespan and as a result risk breaking during use. Incorrect washing and damage, however, are not generally noticeable by a visual examination of the sling.

### Summary of the Invention

The present invention seeks to provide sling testing apparatus for testing a patient sling or similar device. The preferred embodiments described below provide testing apparatus which is portable and readily transported in a passenger vehicle such as an average size motor car.

According to an aspect of the present invention, there is provided sling testing apparatus for testing a patient sling, including a sling support element having a pressurisation surface, a pressurisation device connected to the sling support element and a control unit provided with a load sensor, the control unit being connected to the pressurisation device and operable to control the pressurisation device and to measure load applied to the sling.

Preferably, the apparatus is portable. For this purpose, it is advantageous for the apparatus to be demountable into a plurality of component parts for transportation and/or storage.

In a preferred embodiment, the apparatus includes at least one patient dummy, having a shape similar to the shape of a patient when carried in the sling, the patient dummy having an outer surface which is the pressurisation surface. Advantageously, the apparatus includes a plurality of patient dummies of different sizes for replicating the dimensions of a variety of patients. In the preferred embodiment, the patient dummies nest within one another.

The sling support element preferably includes a plurality of attachments points positioned to hold the sling in a generally deployed configuration. Advantageously, there are provided attachment points suitable for a variety of sling designs and sizes.

The apparatus may include a stand unit, the stand unit preferably being on castors.

The pressurisation device may include a drive element for driving the support surface away from the attachment points. The drive element may be a drive piston. It is preferred that the pressurisation device includes at least one stabilisation element. Preferably, there are provided at least two stabilisation elements, located at opposite sides of the drive element.

The control unit preferably includes a control input for setting a desired test load on a sling, as well as a timer for timing the duration of a test cycle. The control unit preferably monitors and limits the load applied to a sling being tested based on inputted desired load.

The apparatus may include a portable power supply, such as one or more batteries, and/or a coupling to a mains electricity supply.

Other features and advantages of the teachings herein are described below in connection with a description of some preferred embodiments.

### Brief Description of the Drawings

Embodiments of the present invention are described below, by way of example only, with reference to the accompanying drawings, in which:
Figures 1 to 3 show different views of an embodiment of sling testing apparatus;
Figures 4 to 9 show an embodiment of patient dummies;
Figures 10 to 13 show how the patient dummies of Figures 4 to 9 stack or nest within one another;
Figure 14 shows in better detail the base of the frame and actuator unit 14;
Figures 15 and 16 show a detachable coupling element for removably connecting the main components of the apparatus to a stand;
Figures 17 and 18 show a spreader plate of the apparatus;
Figures 19 to 21 show is greater detail the various sling attachment elements of the apparatus;
Figures 22 and 23 show an embodiment of control unit;
Figure 24 is a perspective view from one side of the apparatus in its assembled form;
Figure 25 shows the pressurisation device and guide elements of the preferred embodiment; and
Figures 26 and 27 shows a sling being tested in the apparatus disclosed herein.

### Description of the Preferred Embodiments

The preferred embodiment described below and shown in the accompanying drawings provides sling testing apparatus which can be dismounted into a plurality of component elements able to be carried by a single person in a standard motor vehicle and which is also portable such that it can be moved around a facility such as hospital or care home. Furthermore, the apparatus is designed to be able to test a variety of slings, both in terms of sling design and shape and sling size; as well as testing slings for different sized patients. The apparatus can be self-powered, from an on-board battery unit, or mains powered or both, as desired.

The skilled person will appreciate that the apparatus need not take the precise form shown in the drawings and described below as many features may have a variety of different shapes or characteristics and still provide the desired functionality.

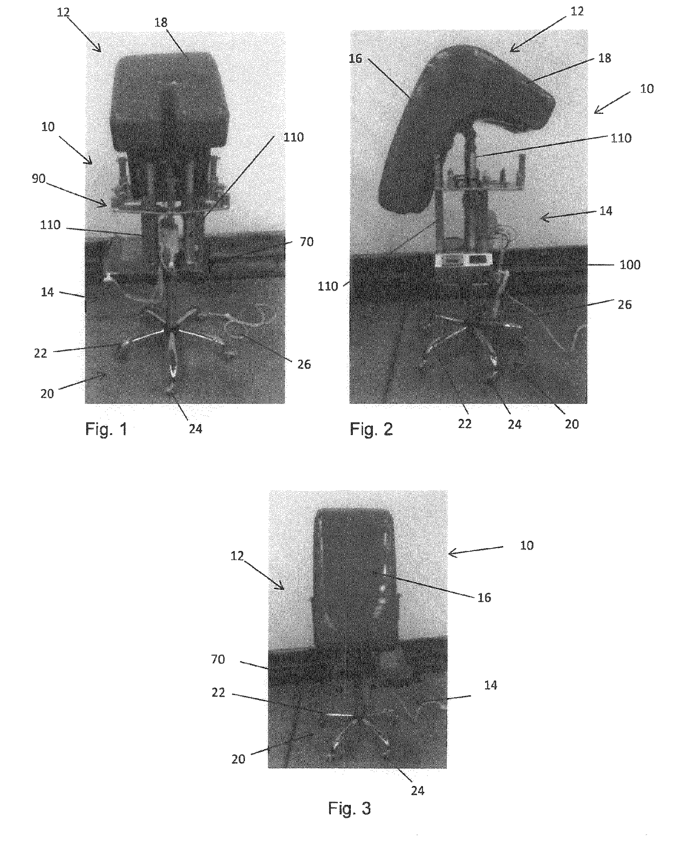

Referring first to Figures 1 to 3, these show the assembled apparatus 10 from different sides. The apparatus 10 includes a support element in the form of a patient dummy unit 12, described in more detail below, and a frame and actuator unit 14. The dummy unit 12 lies on top of the frame and actuator unit 14 and in what could be described as an upside-down configuration, compared to how a patient would lie in the sling.

The dummy unit 12 has a curved outer shape, with a back element 16 and a leg element 18 disposed at substantially 90 degrees to one another in a configuration akin to a sitting patient. The back element 16 is substantially straight and is rounded from side to side in manner similar to a person's back. The leg element 18 may have first and second cantilevered sides similar to a person's upper thighs. The dummy unit 12 therefore mimics the major weight bearing portion of a person.

The frame and actuator unit 14 includes a trolley element 20 made primarily of metal or metal alloy, such as steel or aluminium. The trolley element 20 has a plurality of radially splayed legs 22 each provided with a castor 24 at its extremity. The frame and actuator unit 14 can therefore be wheeled from place to place in order to test slings in different locations as in particular to test slings in situ. The apparatus can usefully also include a removable power cable 26 for use in supplying power to the control unit, described in more detail below.

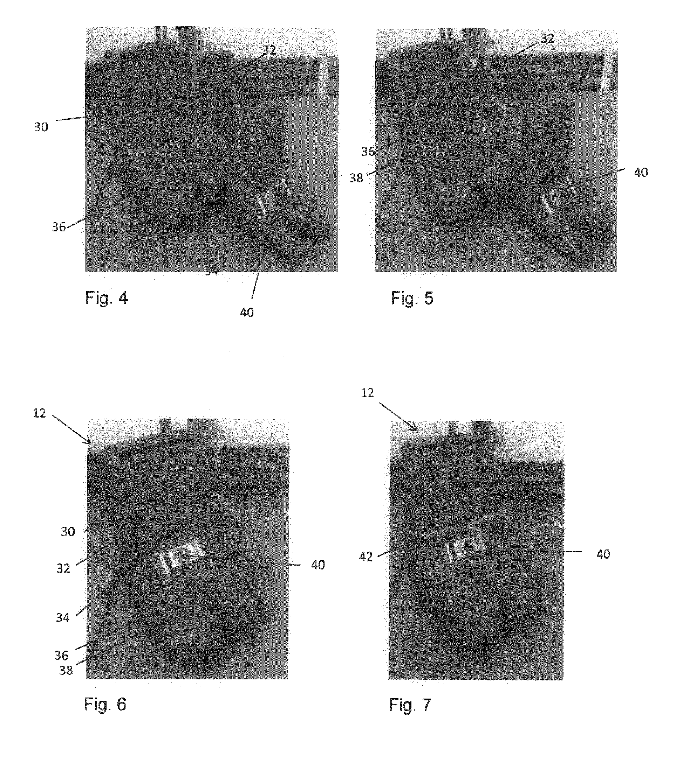

Referring now to Figures 4 to 9, these show in better detail the dummy unit 12 of the embodiment of Figures 1 to 3. The dummy unit 12 is, in this embodiment, composed of three dummy elements 30-34 which nest within one another. The first dummy unit 30 is the largest of the set and intended to be of a size equivalent to a large adult. As can be seen in the drawings, the dummy unit 30 has a smooth and slightly rounded outer surface, while its internal surface is recessed and in particular of a shape and size to accommodate the second dummy unit 32, which is a mid-size unit. The second unit 32 also has a smooth outer surface, similar to the large unit 30, and likewise has a recessed front surface, specifically deep enough to accommodate the third and smallest dummy unit 34. As with the other dummy units 30 and 32, the smallest dummy unit 34 has a smooth outside surface to mimic the shape of a person's back and upper thighs, but has a generally smooth, that is non-recessed, front surface.

In a practical embodiment, the smallest dummy unit 34 is preferably sized for slings in sizes extra small (XS) and small (S), the intermediate sided dummy unit 32 is preferably sized for slings in sizes extra medium (M), large (L) and second large (LL), while the largest dummy unit 30 is preferably sized for slings in size extra-large (XL) and extra extra large (XXL). It will be appreciated that the dummy units 30-34 are advantageously sized and shaped to simulate the shape of the human body when in a sitting configuration.

As will be apparent particularly from Figures 6 and 7, the dummy units 30-34 nest fully together so that the smaller unit fits completely within the volume of the larger unit or units into which it nests. Thus, the combination of the units 30-34 will occupy a volume which is no greater than the volume of the larger unit. In addition, the front side of the units 30-34 is flat with the front lips 36 and 38 of the larger units 30 and 32 respectively. In other embodiments, the inner fitting units 32 and/or 34 could sit a little proud of the larger unit(s) into which they fit, if desired.

As can be seen in Figure 7, when nested or stacked, the dummy units 30-34 can be strapped together by a strap 40 in order to hold the units together, both for transportation and if desired when in use. The dummy units 30-34 can usefully be secured in a car by a standard passenger seat belt.

The dummy units 30-34 could be made of any suitable plastics material. They do not need to be heavy, the lighter the better, and may even be somewhat flexible. As will be evident in the description which follows, the dummy units need to be sufficiently strong to withstand the force applied to them via a sling being tested.

The smallest dummy unit 34 also includes an attachment device 40 which in this embodiment is in the form of a pair of flanges extending from the inner surface of the unit 34 and which have holes therein for receipt of a fixing rod or similar attachment device provided on the frame unit 14. As will be apparent from the drawings, the attachment device may usefully be fixed to a support plate which is in turn attached to the body of the dummy unit 34.

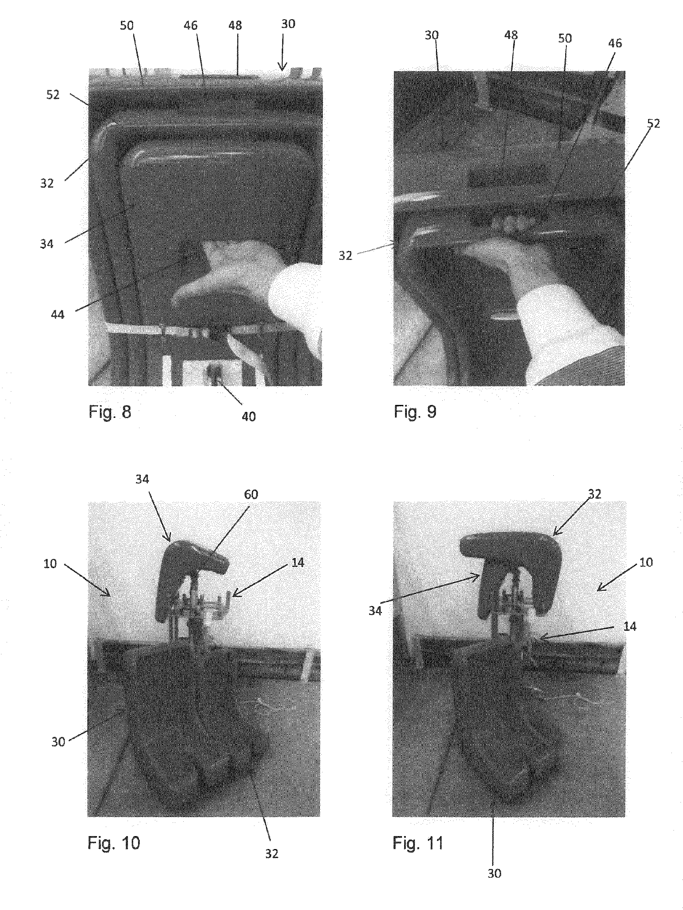

Referring now to Figures 8 and 9, these show in better detail handle arrangements 44, 46, and 48 provided in the dummy units 30-34. The smallest dummy unit 34 has a rectangular aperture leading to a rectangular angled recess in the unit 34, having a length sufficient to accommodate a person's fingers. The recess will extend in a direction similar to the plane of the inner surface of the body portion of the unit 34. On the other hand, the larger units 32 and 34 have in their upper side walls 50, 52, respectively, rectangular shaped slots for the handle arrangements 48, 46, similarly of a size to accommodate a person's fingers. The handle arrangement 44 of the smallest dummy unit 34 is usefully accessible when the dummy units are nested together, whereas the upper side walls 50, 52 of the dummy units 30 and 32 as slightly spaced apart to enable a person's fingers to fit between the two dummy units 30, 32 when they are similarly nested together.

Referring now to Figure 10, this shows the apparatus 10 in a partially assembled form. The smaller of the dummy units 34 can be shown attached to the top of the frame and actuator unit 14, specifically at attachment point 60. As explained above, this may be by means of an attachment bolt or similar device (visible in later Figures).

In the case where small slings are to be tested, the device could be used in the configuration shown in Figure 10, that is without using any of the other dummy units.

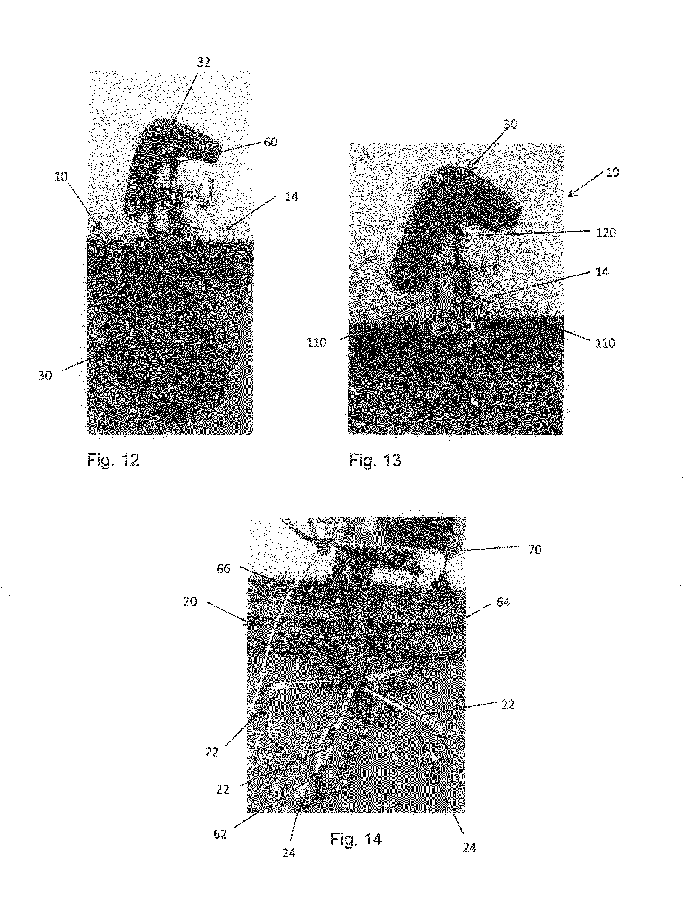

In Figure 11, the medium sized dummy unit 32 can be seen in the process of being coupled to the apparatus 10 and specifically positioned over the smaller dummy unit 34. In Figure 12, the medium sized dummy unit 32 is shown fully positioned over the smaller dummy unit 34, which is no longer visible in the drawing. The smaller dummy unit 34, though, provides support for the medium dummy unit 32 via the attachment point 60 of the frame and actuator unit 14. The larger dummy unit 30 is not yet coupled with the apparatus 10 and in cases where intermediate sized slings are to be tested, the larger dummy unit 30 would not be used. In Figure 13, the larger dummy unit 30 is shown positioned on the apparatus 10 and in particular over the intermediate dummy unit 32, for testing the largest sling sizes.

As will be apparent from Figures 10-13, the dummy units 30-34 can be easily mounted on the frame and actuator unit 14 easily. The nesting characteristic of the dummy units 30-34 means that they can be placed one over the other without having to secure the dummy units together for the subsequent testing procedure, although if desired they could be strapped together, for example by means of strap 42 shown in Figure 7.

As the smallest dummy unit 34 supports the larger dummy units 30 and 32, the larger dummy units 30, 32 could be made weaker than is necessary to withstand the forces applied to them during testing as they will have the support of at least the smallest dummy unit 34. It is preferred, though, that each dummy unit 30-34 is sufficiently strong to be able to withstand alone the testing forces applied thereto.

Referring now to Figure 14, this shows a better view of the trolley element 20, in which each of the radially arranged legs 22 can be seen having castors 24 with breaks 62 incorporated within the castor mechanism and suitable for braking the unit 10 in position during testing of slings. The legs 20 converge to a hub 64 from which there extends a generally vertical support rod or tube 66. It is envisaged that in some embodiments the castors 24 would be substantially larger than those shown in the accompanying drawings.

The legs 20 and rod or tube 66 are preferably made of a metal or metal alloy, such as steel or aluminium.

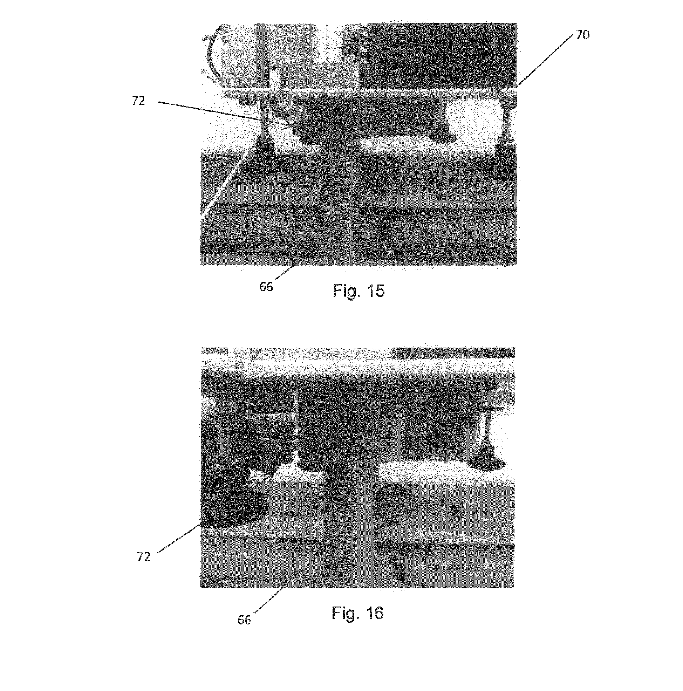

The support shaft 66 couples at its upper end to a support plate 70, which has integral therewith a coupling sleeve 72 into which the upper extremity of the support shaft 66 can reside. A locking nut is usefully provided, passing through a threaded aperture in the support sleeve 72, for locking the support plate assembly 70 to the support shaft 66 and hence to the trolley 20. These features are shown clearly in Figures 15 and 16. The support plate 70 is therefore detachable from the trolley unit 20 for transportation purposes.

With reference to Figure 1 and Figures 17 to 21, the support plate 70 supports a control unit 100 of the device, as well as a plurality of support guides 110 and an actuator including a driving telescopic element 120 which terminates in the attachment point 60 shown in Figure 12.

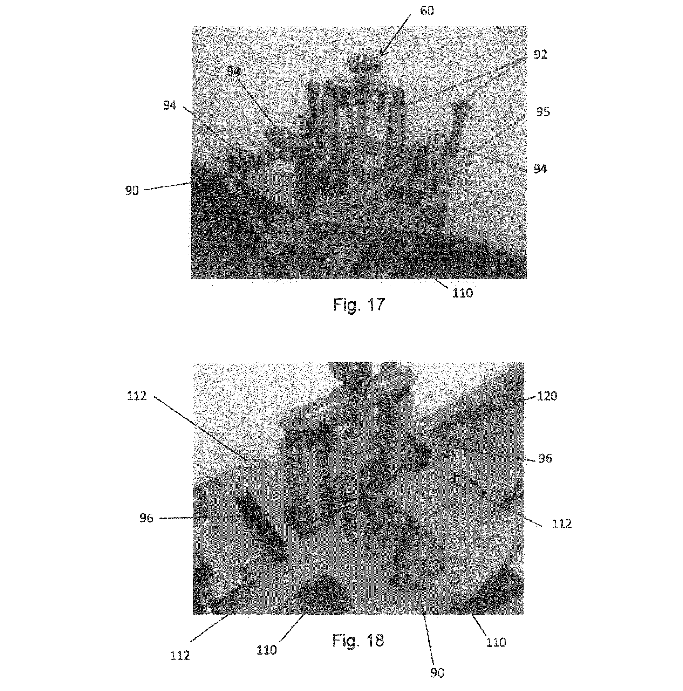

The support bars 110, which in this embodiment are square in cross-section, support a spreader plate 90, which can be seen in better detail in Figures 17 and 18. In this embodiment, the spreader plate 90 is fixed to the support rods 110 by bolts 112. The support plate 70 and spreader plate 90 are, therefore, unitary in this embodiment, although it is not excluded that in other embodiments the spreader plate 90 could be separable from the support bars 110, for instance by removing the fixing bolts.

The spreader plate 90 provides a plurality of fixing points 92, 94, 95 which are positioned in a manner to mimic the locations of the fixing points of a lifting harness. Specifically, the fixing points 92, 94, 95 are spread apart and located relative to one another in a manner analogous to the fixing points of the lifting harness associated with the sling to be tested. Particularly, the spreader plate 90 has a sufficient number and arrangement of fixing points 92, 94, 95 to accommodate a variety of different slings. Evidently, only some of the fixing points 92, 94, 95 will be used for each sling being tested.

The fixing points include points 92 for a passive clip spring, points 94 for a passive loop spring and points 95 for an active sling. The points 92 include side protruding enlarged head hooks onto which a sling clip can be attached. The points 94 include a plurality of sprung latching elements, while the points 95 include sprung latches as well as a fixing protrusion. The manner of use of the fixing points is described in more detail below.

The spreader plate 90 also includes first and second handles 96, useful for carrying the spreader plate and support assembly, to which the actuator elements are also coupled, for ease of transportation.

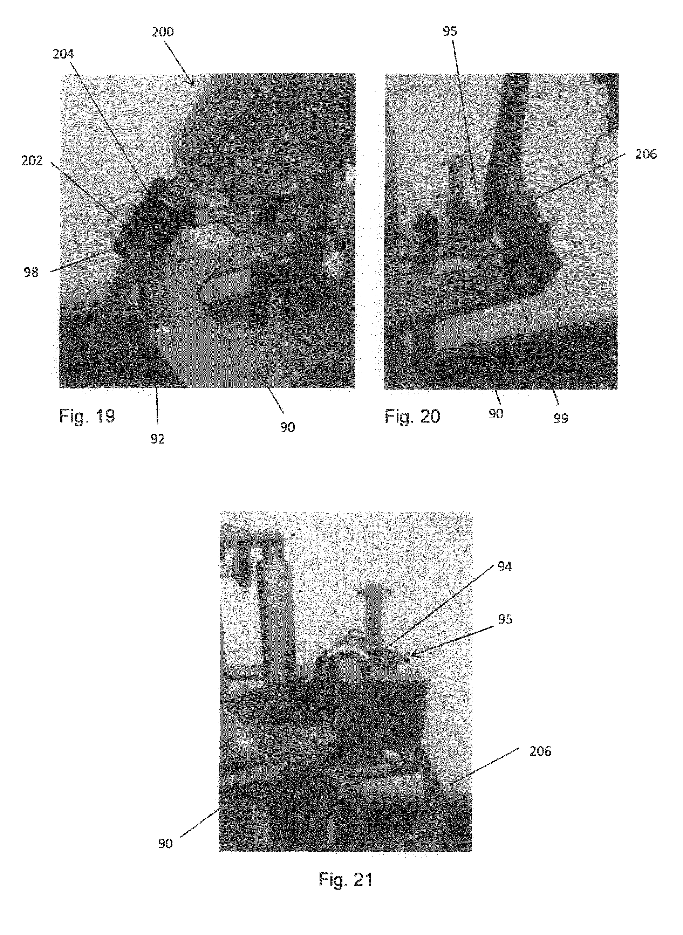

With reference now to Figures 19-21, these shows how the latching elements 92, 94, 95 can be used with a sling. Referring first to Figure 19, a part of a sling 200 can be seen in the Figure, to which there is provided attached by a strap a hooking element 202 which has a plurality of apertures 204 therein. The apertures 204 fit through an enlarged head 98 of the fixing points 92 and onto the holding rod or bolt.

By contrast, the latching elements 94 include a spring clip 99 which can be biased to an open position to allow a loop 206 of a sling 200 to be passed therethrough and into the latching loop 94. As can be seen in Figure 21, the loop 206 cannot free itself from the latch 94, unless the loop 206 is intentionally removed from the latch 94 by pushing back the sprung element 99. The active fixing points 95 allow both hooking of a sling loop as well as of a fixing clip 202.

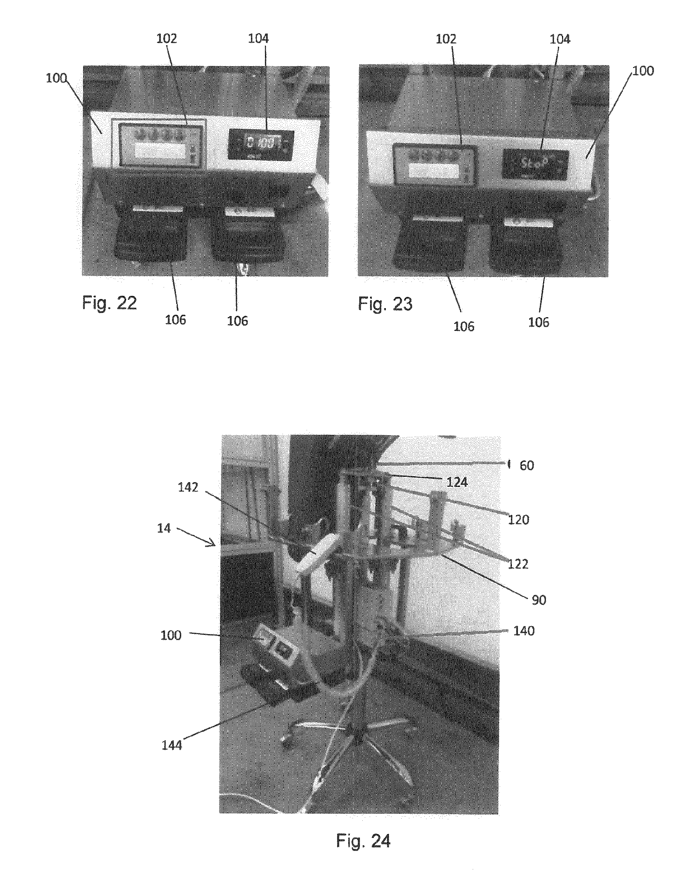

With reference now to Figures 22 and 23, these show an example of the control unit 100 of the apparatus 10. The control unit includes a display unit 102, a countdown timer 104 and replaceable rechargeable batteries 106 which fit within suitable receiving slots within the control unit 100. Operation of the control unit 100 is described in further detail below. The control unit 100 may be powered by the batteries, by the mains cable 26 or by a combination of the two. It is preferred that the control unit 100 is designed to operate with a single battery 106, such that the other battery acts as a backup battery. Advantageously, the control unit 100 includes a battery charge sensor unit and provides an indication of remaining battery charge.

As will be apparent from Figures 1, 10 and 24 in particular, the control unit 100 sits on the support plate 70, preferably being attached thereto by suitable removable fixings (not shown). In some embodiment, the support plate assembly may include guide rails into which the casing of the control unit 100 can fit by simply sliding the casing onto the guide rails. Suitable guide rails may be disposed vertically.

The control unit 100 in the preferred embodiment comprises components which will be familiar to a person skilled in the art, and in particular includes an input unit 102, 142 inputting a desired test load to be applied to a sling as well as the duration of a test, and also a countdown timer and display controller 104 for providing an indication of the state of operation of the controller 100. Furthermore, the controller 100 includes a drive mechanism for driving the actuator 120, described in further detail below.

Referring now to Figure 24, this shows a view of the frame and actuator assembly 14, where there can be seen an actuator unit 140 which is coupled to the control unit 100 and an operator key pad 142, the latter being connected by a suitable cable 144. The control unit 100, in this example, is a separate component connected to the actuator unit 140 but in other embodiments these may be formed as an integral unit.

The actuator unit 140 is coupled to the extendable piston 120 and includes a drive mechanism (not shown) able to move the extendable piston element 120 upwardly or downwardly relative to the spreader plate 90. The drive mechanism may be hydraulic or mechanical. In one practical embodiment, the actuator may be a Linak LA 31 device having a 350mm stroke range.

The apparatus 14 also includes two stabilising columns 122 disposed either side of the extension unit 120 and are preferably telescopic elements able to extend and contract in unison with the extendable piston 120.

The guide columns 122 are connected together to a spreader bar 124, the latter being integral with the attachment element 60. The skilled person will appreciate that the guide columns 122 and extension unit 120 will be attached to the support plate 60 by any suitable means.

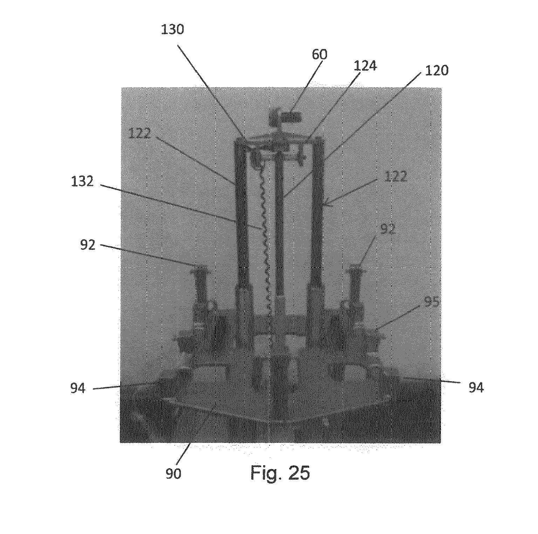

With reference now to Figure 25, the extension unit 120 can be seen in its extended configuration, in which the attachment element 60 is at its highest position and in particular furthest from the spreader plate 90 and sling attachment points 92-95. This position could be considered a sling tensioning position. The skilled person will appreciate that the extension unit 120 can be moved upwardly and downwardly, that is away from and towards the spreader plate 90 as required in order to perform a test on a sling.

Coupled to the spreader bar 124 is an extensometer 130 for measuring the load applied to a sling being tested. The extensometer 130 is coupled to the control unit 100 by a coiled cable 132 able to extend and contract with movement of the spreader bar 124. Suitable extensometers are within the common knowledge of the skilled person.

In some embodiments, there may be provided an additional support plate disposed below the spreader plate 90 , to which the support rods 110 can be connected. The provision of an additional support plate will increase the stability of the structure, will remove tension between the support plate 70 and the spreader plate 90, will allow for removal of the spreader plate 90 for transportation purposes, and will also enable the use of shorter support rods 110. The additional support plate can also provide a location for an external battery, for powering the actuator unit 140 and/or the control unit 100, should this be provided in some embodiments.

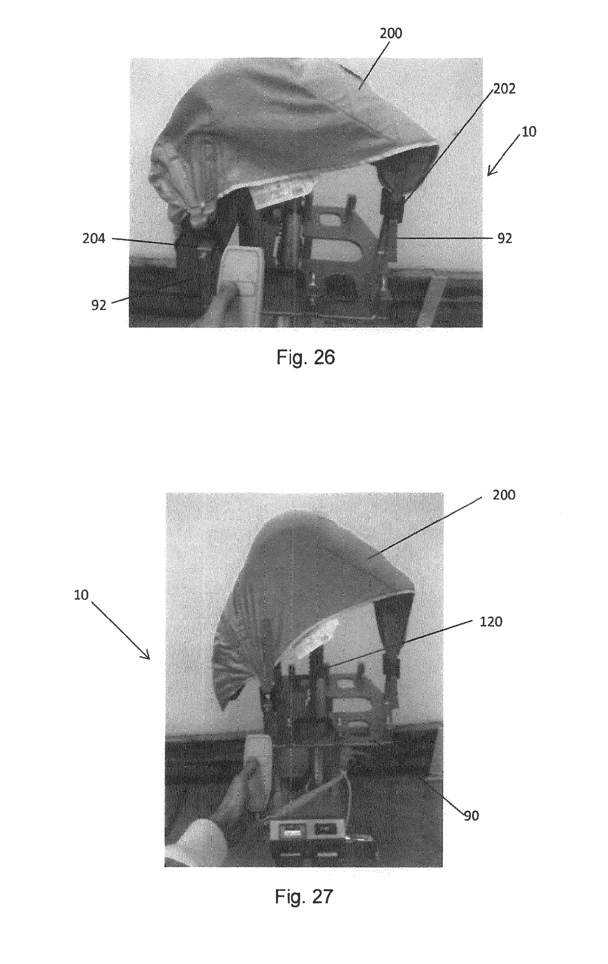

Referring now to Figures 26 and 27, this shows the top end of the apparatus 10 in use, that is with a sling 200 mounted for testing. The sling 200 is fitted over the dummy unit 30-34 (whichever is appropriate for the size of sling being tested) and the straps and loops 202, 204 of the sling 200 are attached to suitable attachment point 92-95 as appropriate. As will be apparent from Figures 26 and 27, only a few of the attachment points of the spreader plate 90 are used for the sling 200.

With reference now to Figure 26, it can be seen that the apparatus 10 has been operated in order to extend the extension or piston element 120 and thus to move the dummy unit 30-34 upwardly and away from the spreader plate 90, thereby putting the sling 200 under tension. In practice, the actuator unit 140 is operated by pressing the associated control on the hand-held pad 142 until the load imposed on the sling 200 reaches the safe working load for that sling, indicated in the display panel 102 of the control unit 100. The control unit 100 can be programmed with a test load limit, for instance by pressing of an appropriate input button on the unit 102. Once the safe working load has been reached, the timer unit 104 can be set to count down given period, which may be from 1 to 20 minutes or more, typically.

During the period in which the sling 200 is kept under working tension, the operator can inspect the sling 200 for signs of damage. It will be appreciated that damage to the sling 200 may not be visible until the sling is put under tension.

At the end of the test period, the control unit 100 will preferably generate an audible sound and/or indicate this visually on the display 104, as shown in Figure 23. At this point, the operator can release the tension on the sling 200 by retracting the extension device 120, bringing the dummy units 30-34 back towards the spreader plate 90. The sling 200 can then be unlatched from the attachment points 92-95 on the spreader plate. In other embodiments, tension can be removed by automatic retraction of the extension element 120.

Once testing has been completed and the apparatus no longer needed, the elements of the apparatus 10 can dismantled for transportation purposes.

In one practical embodiment, the apparatus 10 could be constructed of five detachable parts, the dummy units 30-34, the control unit 100 and the metal frame unit 14, the latter being detachable in three parts. The first part is the star base with legs 22 and castors 24, to which the metal leg 66 is attached. The second part is the frame 14, which comprises the support panel 70, the support columns 110 and the actuator 140 and extension element 120. As described above, the spreader plate 90 is also preferably separately detachable form the frame 14. In some embodiments, the actuator unit 140 may also be a separable component.

It is preferred that the apparatus 10 can be assembled and disassembled within a short period of time, preferably no more than around five minutes, and that the weight of any of the detachable units is no more than 25 kilograms, preferably significantly less.

The apparatus 10 therefore provides a portable test unit able to test a variety of patient support slings in situ, in order to ensure the strength and integrity of the slings. The apparatus can be set to produce a limited loading force on the slings and for a specified period consistent with the normal periods of use of such slings. The apparatus can also be dismounted into a plurality of different parts for ease of transportation.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

The disclosure in the abstract accompanying this application is incorporated herein by reference.

## Claims

1. Sling testing apparatus for testing a patient sling, including a sling support element having a pressurisation surface, a pressurisation device connected to the sling support element and a control unit provided with a load sensor, the control unit being connected to the pressurisation device and operable to control the pressurisation device and to measure the load applied to the sling.

2. Sling testing apparatus according to claim 1, wherein the apparatus is portable.

3. Sling testing apparatus according to claim 1 or 2, wherein the apparatus is demountable into a plurality of component parts for transportation and/or storage.

4. Sling testing apparatus according to any preceding claim, wherein the apparatus includes at least one patient dummy having a shape similar to the shape of a patient when carried in the sling, the patient dummy having an outer surface which is the pressurisation surface.

5. Sling testing apparatus according to any preceding claim, wherein the apparatus includes a plurality of patient dummies of different sizes for replicating the dimensions of a variety of patients.

6. Sling testing apparatus according to claim 5, wherein the patient dummies nest within one another.

7. Sling testing apparatus according to any preceding claim, wherein the sling support element includes a plurality of attachments points positioned to hold the hold a sling in a generally deployed configuration.

8. Sling testing apparatus according to claim 7, wherein there are provided attachment points suitable for a variety of sling designs and sizes.

9. Sling testing apparatus according to any preceding claim, wherein the apparatus includes a stand unit.

10. Sling testing apparatus according to claim 9, wherein the stand unit is on castors.

11. Sling testing apparatus according to any preceding claim, wherein the pressurisation device includes a drive element for driving the support surface away from the attachment points.

12. Sling testing apparatus according to claim, wherein the drive element is a telescopic extension element.

13. Sling testing apparatus according to any preceding claim, wherein the pressurisation device includes at least one stabilisation element.

14. Sling testing apparatus according to claim 13, wherein
there are provided at least two stabilisation elements, at opposite sides of the drive element.

15. Sling testing apparatus according to any preceding claim, wherein the control unit includes a control input for setting a desired test load on a sling.

16. Sling testing apparatus according to any preceding claim, wherein the control unit includes a timer for timing the duration of a test cycle.

17. Sling testing apparatus according to any preceding claim, wherein the apparatus includes a portable power supply and/or a coupling to a mains electricity supply.
